# EUROPÄISCHE PATENTSCHRIFT

(11) **EP 2 497 685 B1**
(45) Veröffentlichungstag und Bekanntmachung des Hinweises auf die Patenterteilung: **23.10.2013**
(21) Anmeldenummer: 11001853.8
(22) Anmeldetag: 05.03.2011
(51) Int. Cl.: B60P 3/20

(54) **Verstellbare Trenneinrichtung**
Adjustable partition device
Dispositif de séparation réglable

(43) Veröffentlichungstag der Anmeldung: 12.09.2012
(73) Patentinhaber: Brandt-Kühlfahrzeugbau GmbH & Co. KG, 32699 Extertal - Bösingfeld (DE)
(72) Erfinder: Wiebe, Wilhelm, 32657 Lemgo (DE)
(74) Vertreter: Schober, Mirko

(56) Entgegenhaltungen:
- WO-A2-89/10857
- FR-A3- 2 635 737

## Beschreibung

Die Erfindung betrifft eine verstellbare Trenneinrichtung nach dem Oberbegriff von Anspruch 1.

In Kühlfahrzeugen mit mehreren Kammern werden neben fest eingebauten Trennwänden innerhalb des Kühlaufbaus auch solche Wandelemente verwendet, die verschoben und/oder hochgeklappt werden können, um die Größe der einzelnen Kammern verändern zu können oder diese den Anforderungen des jeweiligen Transportgutes anzupassen.

Klappbare (Trenn-)Wandelemente in Kühlfahrzeugen verfügen zumeist über ein Drehgelenk, das an einem an einer Wand, insbesondere der Decke des Kühlfahrzeugaufbaus oder an verschieblich gelagerten Laufwagen befestigt ist. Das klappbare Wandelement ist verschwenkbar angelenkt, so dass das Wandelement aus einer senkrecht zur Fahrtrichtung orientierten Gebrauchsstellung in eine horizontale Nichtgebrauchsstellung verschwenkt werden kann. Das Wandelement kann von Hand aus der Gebrauchsstellung in die Nichtgebrauchsstellung verschwenkt werden, um die Kammer zu beoder entladen und/oder das Wandelement mit dem Laufwagen zu verschieben.

Um das Wandelement von Hand aus der Gebrauchsstellung in die Nichtgebrauchsstellung zu verschwenken, muss nicht nur das aus der Gewichtskraft des Wandelements resultierende Drehmoment, sondern auch das Reibmoment aus den Reibkräften überwunden werden, die durch Reiben von am Wandelement vorgesehenen Dichtungen an den an das Wandelement angrenzenden Wänden des Kühlfahrzeugaufbaus entstehen. Dies führt dazu, dass das manuelle Hochklappen des Wandelements erschwert wird.

Um das Hochklappen zu erleichtern, werden gegenwärtig mechanische Federn oder Gasfedern zur Unterstützung eingesetzt. Diese Federn erfordern zwangsläufig einen gewissen Bauraum, was wiederum zum Verlust nutzbarer Durchgangshöhe führt. Um diesen Verlust möglichst gering zu halten, muss der Hebelarm zwischen der Schwenkachse des Wandelements und dem Anlenkpunkt der Feder möglichst kurz gehalten werden. Solch eine Vorrichtung ist aus der FR 2635737 bekannt. Dafür sind jedoch sehr starke Federn erforderlich, um bei einem entsprechend kurz ausfallenden Hebelarm die zum Anheben des Wandelements erforderlichen Kräfte aufzubringen. Federn dieser Art sind sehr teuer und belasten die eingesetzten Gelenke stark. Bei größeren Wandelementen müssen sogar mehrere Federn eingesetzt werden.

Aufgabe der Erfindung ist es, eine Trenneinrichtung der eingangs genannten Art bereit zu stellen, die die erwähnten Nachteile nicht aufweist.

Die Aufgabe wird mit den Merkmalen des Anspruchs 1 gelöst. Vorteilhafte Ausführungsformen finden sich in den Unteransprüchen.

Erfindungsgemäß ist als Kraftübertragungseinrichtung ein Zugelement vorgesehen, welches im einfachsten Fall ein Seil- oder Kettenzug sein kann und mit dem Wandelement gekoppelt ist. Das Zugelement wird dabei auf Zug belastet. Die Kopplung des Zugeelements mit dem Wandelement ist so vorgesehen, dass der Kopplungspunkt des Zugelements am Wandelement verschieblich ist.

Hierdurch wird erreicht, dass sich der Kopplungspunkt beim Verschwenken des Wandelements um dessen Schwenkachse entlang des Wandelements verschiebt. Dies führt dazu, dass in der vertikalen Gebrauchsstellung des Wandelements ein vergleichsweise kurzer Hebelarm zwischen Kopplungspunkt und Schwenkachse realisiert ist. Die Länge des Hebelarms vergrößert sich beim Klappen des Wandelements dadurch, dass der Kopplungspunkt des Zugelements von der Schwenkachse des Wandelements weg wandert. Mit zunehmendem Hochklappen wird also die unterstützende Kraft kontinuierlich größer.

Mit dieser Maßnahme kann auf konventionelle starke Federn verzichtet werden.

Bevorzugt ist am Wandelement eine Schiene vorgesehen, in der ein Schlitten beweglich geführt ist, an welchem das bevorzugt als Zugseil ausgebildete Zugelement befestigt ist. Das Zugseil ist an seinem anderen Ende permanent am Fahrzeugaufbau oder dem Laufwagen gehalten und auf Zug belastet. Aufgrund der permanenten Zugkräfte am Seil sowie der geometrischen Anordnung der Schiene zur Umlenkrolle legt sich der Schlitten in der vertikalen Gebrauchsstellung des Wandelements immer an einen oberen Endanschlag in der Schiene an, wodurch sich in dieser Position des Wandelements ein vergleichsweise kurzer Hebelarm zwischen dem Kopplungspunkt des Zugelements und der Schwenkachse des Wandelements ergibt. Infolgedessen ist auch ein durch die Feder unterstützend wirkendes Drehmoment aus Federkraft und Hebelarm in dieser Stellung des Wandelements entsprechend gering.

Durch die Verschiebbarkeit des Schlittens in der Schiene wird eine kontinuierliche Veränderung des Hebelarms während des Verschwenkens erreicht. Bei fortschreitendem Verschwenken Wandelements in die Nichtgebrauchsstellung vergrößert sich der Hebelarm kontinuierlich. Das bedeutet, dass aufgrund der Vergrößerung des Hebelarms eine entsprechend immer geringer werdende Zugkraft am Zugelement erforderlich ist, so dass eine kleinere Feder mit geringerer Federkraft oder Federkonstante gewählt werden kann, was erheblich preisgünstiger ist als die bekannten Lösungen nach dem Stand der Technik.

Die Erfindung wird nachfolgend anhand eines in den Figuren 1 bis 3 gezeigten Ausführungsbeispiels schematisch näher erläutert.
- Figur 1 -: zeigt ein erfindungsgemäß montiertes Wandele-ment in der vertikalen Gebrauchsstellung,
- Figur 2 -: zeigt den Ausschnitt Z im Detail,
- Figur 3 -: zeigt das Wandelement während des Verschwenk-vorganges.

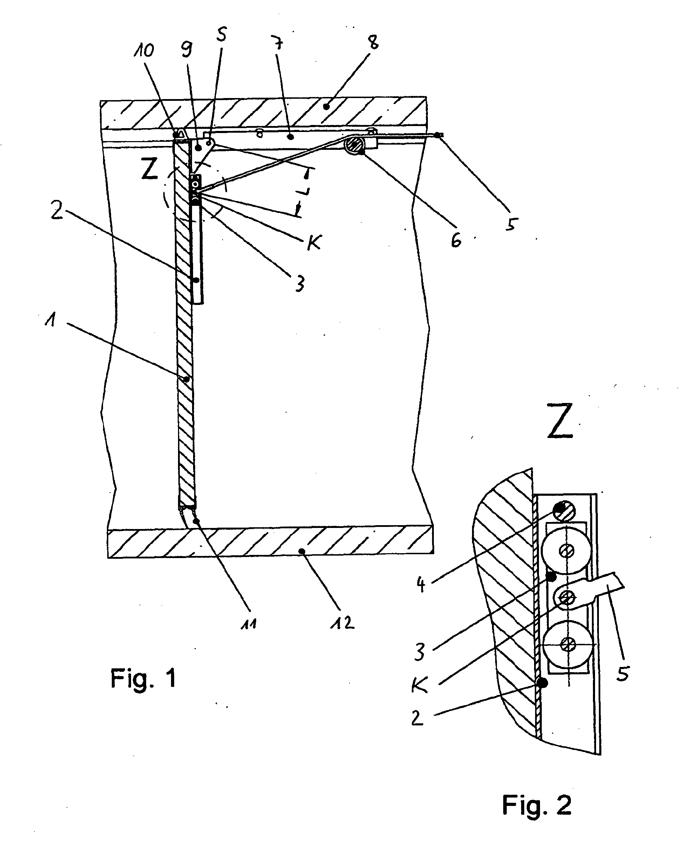

Figur 1 zeigt einen Querschnitt durch den Aufbau eines Kühlfahrzeugs mit einem (Trenn-)Wandelement 1 und einer erfindungsgemäßen Kraftübertragungseinrichtung, die das Wandelement 1 mit dem Fahrzeugaufbau koppelt. Das Wandelement 1 weist eine Schiene 2 auf, die mit einer Längsachse parallel zu Seitenkanten des Wandelements 1 ausgerichtet ist.

Zur Abdichtung zwischen einzelnen Kühlbereichen ist am Wandelement am oberen Ende üblicherweise ein Delta-Gummi 10 vorgesehen und stellt eine Abdichtung zwischen dem oberen Ende des Wandelements 1 und dem Dach 8 des Fahrzeugaufbaus her. Am unteren Ende und an den Längsseiten weist das Wandelement 1 bevorzugt Doppellippendichtungen 11 auf, welche eine thermische Isolierfunktion ausüben, um den Luftaustausch zwischen diesen zwei durch das Wandelement 1 separierten Kammern zu unterbinden. Die Doppellippendichtungen 11 schleifen an den beiden Längsseiten an den Fahrzeugwänden über den gesamten Drehwinkelbereich. Die Doppellippendichtung 11 am unteren Ende des Wandelements 1 schleift über einen Fahrzeugboden 12 über einen letzten kleinen Winkelbereich kurz vor dem Erreichen der vertikalen Gebrauchsstellung des Wandelements 1, so dass die Dichtungen beim Verschwenken für erhöhte Reibung sorgen.

Die Schiene 2 ist an dem Wandelement 1 fest angebracht, etwa durch eine Schraub - oder Klebeverbindung. In der Schiene 2 ist ein Schlitten 3 verschieblich geführt, wie in Figur 2 vergrößert dargestellt ist. Wenigstens am oberen Ende der Schiene 2 ist ein Endanschlag 4 vorgesehen, so dass der Schlitten 3 im Betrieb der Vorrichtung nicht aus der Schiene 2 herausgezogen wird.

Der Schlitten 3 ist mit dem im gezeigten Beispiel als Seil 5 ausgebildeten Zugelement am Kopplungspunkt K verbunden. Alternativ zum Seil 5 kann eine Zugkraft auch mit einer Kette übertragen werden. Das am Schlitten 3 befestigte Seil 5 ist über eine Umlenkrolle 6 zu einer Feder geführt, mit der es verbunden ist (nicht gezeigt). Die Feder ist an geeigneter Stelle mit dem Fahrzeugaufbau oder dem Laufwagen verbunden. Die Umlenkrolle 6 ist am Fahrzeugaufbau fest oder - wie im gezeigten Beispiel - verschieblich angebracht. Bei der gezeigten verschieblichen Ausführungsform ist die Feder an einem parallel zur Fahrtrichtung verschieblichen Laufwagen 7 angebracht.

In der gezeigten Ausführungsform ist auch das Wandelement 1 mittels eines Drehlagers 9 um eine Schwenkachse S schwenkbar am Laufwagen 7 angelenkt. Das Drehlager 9 ist dabei an einem oberen Ende des Wandelements 1 oberhalb der Schiene 2 befestigt.

Die Strecke L gibt die Länge des resultierenden Hebelarms zwischen einem Kopplungspunkt K des Seils 5 am Schlitten 3 und der Schwenkachse S an. Diese Strecke L und damit der hierdurch definierte Hebelarm verändern sich, wenn der Schlitten 3 bewegt wird.

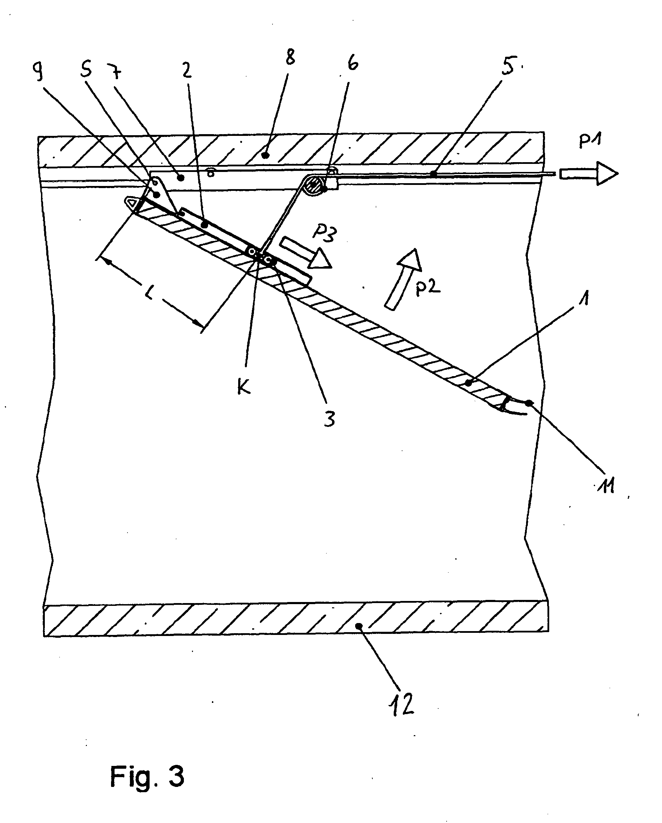

Die Anordnung ist so eingerichtet, dass am Zugelement 5 eine Zugspannung in Richtung des Pfeils P1 anliegt, so dass das Wandelement 1 in Richtung der Nichtgebrauchslage vorgespannt ist. Wird das Wandelement 1 aus der in Figur 1 gezeigten vertikalen Gebrauchslage in Richtung der Nichtgebrauchslage verschwenkt, so stellt sich die in der Figur 3 dargestellte Situation ein. Bei der Bemessung der auf das Zugeelement 5 wirkenden Zugkraft ist neben einer Massenträgheitskraft des Wandelements 1 auch die Reibungskraft zu berücksichtigen, die durch die Reibung von Dichtungen 11 an den Fahrzeugwänden beim Schwenken des Wandelements 1 hervorgerufen wird. Das dargestellte Wandelement 1 schwenkt um die Schwenkachse S des Drehlagers 9 und bewegt sich dabei in Richtung des Pfeils P2 auf den Laufwagen 7 bzw. das Dach 8 des Fahrzeugaufbaus zu. Gleichzeitig bewegt sich der Schlitten 3 in Richtung des Pfeils P3 zum von der Schwenkachse S entfernten Rand des Wandelements 1. Hierdurch vergrößert sich die Länge L des Hebelarms zwischen Schwenkachse S und Kopplungspunkt K des Zugelements 5.

Bei der dargestellten Konstruktion wird der Hebelarm kontinuierlich verlängert, je weiter sich das Wandelement 1 dem Dach 8, d.h. der Nichtgebrauchsstellung nähert. Durch die Verlängerung des Hebelarms verringert sich die vom Zugelement 5 zu übertragende Zugkraft. Dadurch wird die körperliche Belastung des Bedienpersonals beim Hochklappen des Wandelements 1 deutlich verringert. Zudem ermöglicht dieser variable Hebelarm eine kompaktere Bauweise. Dadurch steht beim Be- und Entladen mehr Raum im Kopfbereich zur Verfügung.

Das Wandelement 1 kann bei der erfindungsgemäßen Konstruktion nicht nur um die Schwenkachse S verschwenkt werden, sondern auch in Richtung des Pfeils P1 verschoben werden.

## Patentansprüche

1. Verstellbare Trenneinrichtung, insbesondere zur Kammertrennung in Kühlfahrzeugen, mit einem Wandelement (1), welches um eine Schwenkachse (S) von einer etwa horizontalen Nichtgebrauchsposition in eine etwa vertikale Gebrauchsposition verschwenkbar ist und zur Öffnungsunterstützung eine Kraftübertragungseinrichtung (5, 6) aufweist,
**dadurch gekennzeichnet,**
**dass** die Kraftübertragungseinrichtung ein mit dem Wandelement (1) gekoppeltes Zugelement (5) aufweist, wobei der Kopplungspunkt (K) des Zugelements (5) am Wandelement (1) verschieblich ist.

2. Trenneinrichtung nach Anspruch 1,
**dadurch gekennzeichnet,**
**dass** das Wandelement (1) wenigstens eine Schiene (2) mit einem darin verschieblichen Schlitten (3) aufweist.

3. Trenneinrichtung nach Anspruch 2,
**dadurch gekennzeichnet,**
**dass** der Schlitten (3) mit dem Zugelement (5) verbunden ist.

4. Trenneinrichtung nach Anspruch 2 oder 3,
**dadurch gekennzeichnet,**
**dass** in der Schiene (2) ein Endanschlag (4) für den Schlitten (3) vorgesehen ist.

5. Trenneinrichtung nach einem der vorhergehenden Ansprüche,
**dadurch gekennzeichnet,**
**dass** das Wandelement (1) an einem Ende ein Drehlager (9) aufweist.

6. Trenneinrichtung nach einem der vorhergehenden Ansprüche,
**dadurch gekennzeichnet,**
**dass** das Drehlager (9) mit einem Laufwagen (7), der Wand oder dem Dach (8) des Fahrzeugaufbaus verbunden ist.

7. Trenneinrichtung nach Anspruch 6,
**dadurch gekennzeichnet,**
**dass** der Laufwagen (7), die Wand oder das Dach (8) des Fahrzeugaufbaus wenigstens eine Umlenkrolle (6) aufweist.

8. Trenneinrichtung nach einem der vorherigen Ansprüche,
**dadurch gekennzeichnet,**
**dass** das Zugelement (5) so mit dem Wandelement (1) gekoppelt ist, dass sich die Länge (L) des zwischen der Schwenkachse und dem Kopplungspunkt (K) des Zugelementes (5) definierten Hebelarms beim Verbringen des Wandelements (1) von der Gebrauchsposition in die Nichtgebrauchsposition verlängert und beim Verbringen von der Nichtgebrauchsposition in die Gebrauchsposition verkürzt.

9. Fahrzeugaufbau, insbesondere Kühlfahrzeugaufbau, mit einer Trenneinrichtung nach einem der vorherigen Ansprüche, welche schwenkbar an einer Wand (8) des Fahrzeugaufbaus gelagert ist, wobei die Kraftübertragungseinrichtung (5, 6) zwischen dem Wandelement (1) und dem Fahrzeugaufbau wirksam ist.

## Claims

1. Adjustable partition device, more particularly for separating compartments in refrigerated vehicles, with a wall element (1) which can be swivelled about a swivel axis (S) from an approximately horizontal non-use position into an approximately vertical useful position and has a power transmission device (5, 6) for assistance during opening,
**characterised in that**
the power transmission device has a traction element (5) coupled to the wall element (1) wherein the coupling point (K) of the traction element (5) is displaceable on the wall element (1).

2. Partition device according to claim 1,
**characterised in that**
the wall element (1) has at least one rail (2) with a slide carriage (3) displaceable therein.

3. Partition device according to claim 2,
**characterised in that**
the slide carriage (3) is connected to the traction element (5).

4. Partition device according to claim 2 or 3,
**characterised in that**
an end stop (4) is provided in the rail (2) for the slide carriage (3).

5. Partition device according to one of the preceding claims,
**characterised in that**
the wall element (1) has a pivot bearing (9) at one end.

6. Partition device according to one of the preceding claims,
**characterised in that**
the pivot bearing (9) is connected to a track carriage (7), the wall or the roof (8) of the vehicle body.

7. Partition device according to claim 6,
**characterised in that**
the track carriage (7), the wall or the roof (8) of the vehicle body has at least one guide pulley (6).

8. Partition device according to one of the preceding claims,
**characterised in that**
the traction element (5) is coupled to the wall element (1) so that the length (L) of the lever arm defined between the swivel axis and the coupling point (K) of the traction element (5) is increased when the wall element (1) is brought from the useful position into the non-use position, and is shortened when the wall element is brought from the non-use position into the useful position.

9. Vehicle body, more particularly a refrigerated vehicle body, having a partition device according to one of the preceding claims, which is mounted for swivel movement on a wall (8) of the vehicle body, wherein the power transmission device (5, 6) is active between the wall element (1) and the vehicle body.

## Revendications

1. Dispositif de séparation réglable, en particulier pour la séparation de chambres dans un véhicule automobile de réfrigération, avec un élément de paroi (1) qui peut pivoter autour d'un axe de pivotement (S), pour être amené d'une position de non utilisation approximativement horizontale dans une position d'utilisation approximativement verticale, et qui est doté d'un système de transmission de force (5, 6) pour faciliter l'ouverture,
**caractérisé en ce que**
le système de transmission de force présente un élément de traction (5), qui est couplé avec l'élément de paroi (1), sachant que le point de couplage (K) de l'élément de traction (5) peut être déplacé sur l'élément de paroi (1).

2. Dispositif de séparation selon la revendication 1,
**caractérisé en ce que**
l'élément de paroi (1) présente au moins un rail (2), dans lequel sont prévus des chariots (3), qui peuvent être déplacés dans ledit rail.

3. Dispositif de séparation selon la revendication 2,
**caractérisé en ce que**
le coulisseau (3) est relié à l'élément de traction (5).

4. Dispositif de séparation selon revendication 2 ou 3,
**caractérisé en ce que**,
dans le rail (2) est prévue une butée de fin de course (4) pour le chariot (3).

5. Dispositif de séparation selon l'une des revendications précédentes,
**caractérisé en ce que**
l'élément de paroi (1) présente, à une extrémité, un coussinet de pivotement (9).

6. Dispositif de séparation selon l'une des revendications précédentes,
**caractérisé en ce que**
le coussinet de pivotement (9) est relié à un chariot (7), à la paroi ou au toit (8) de la caisse du véhicule automobile.

7. Dispositif de séparation selon la revendication 6,
**caractérisé en ce que**
le chariot (7), la paroi ou le toit (8) de la caisse du véhicule automobile présentent au moins une poulie de renvoi (6).

8. Dispositif de séparation selon l'une des revendications précédentes,
**caractérisé en ce que**
l'élément de traction (5) est couplé avec l'élément de paroi (1) de sorte que la longueur (L) du bras de levier, définit entre l'axe de pivotement et le point de couplage (K) de l'élément de traction (5) soit prolongé lorsque l'élément de paroi (1) est amené de la position d'utilisation dans la position de non utilisation, et raccourci lorsque qu'il est amené de la position de non utilisation dans la position d'utilisation.

9. Caisse de véhicule automobile, en particulier caisse de véhicule automobile de réfrigération, qui est doté d'un dispositif de séparation selon l'une des revendications précédentes, qui est monté à pivotement sur une paroi (8) de la caisse du véhicule automobile, sachant que le système de transmission de force (5, 6) agit entre l'élément de paroi (1) et la caisse du véhicule automobile.
